# EUROPEAN PATENT SPECIFICATION

(11) **EP 0 427 383 B1**
(45) Date of publication and mention of the grant of the patent: **10.08.1994**
(21) Application number: 90309789.7
(22) Date of filing: 06.09.1990
(51) Int. Cl.: B29C 53/08, B60R 13/06, B29C 67/18

(54) **Sealing strips and methods of making them**
Gummidichtungen und Verfahren zu ihrer Herstellung
Joints d'étanchéité et procédés pour leur fabrication

(30) Priority: 10.11.1989 GB 8925465
(43) Date of publication of application: 15.05.1991
(73) Proprietor: DRAFTEX INDUSTRIES LIMITED, Edinburgh, EH3 6YY, Scotland (GB)
(72) Inventor: Kühnen, Dieter, D-5177 Titz-Opherten (DE)
(74) Representative: Foster, David Martyn

(56) References cited:
- DE-A- 2 747 157
- FR-A- 2 332 409
- FR-A- 2 624 191
- PATENT ABSTRACTS OF JAPAN vol. 12, no. 437 (M-765)(3284) November 17, 1988& JP-A-63 172 632 (NISHIKAWA RUBBER KOGYO K.K. ) July 16, 1988

## Description

The invention relates to sealing strips and methods and apparatus for making them.

Sealing strips are known for use in the sealing of door and other openings in motor vehicle bodies. The perpiphery of such an opening may be defined by a flange which lies generally in the plane of the opening and is formed by a joint where inner and outer body panels are brought together and welded. Such known sealing strips comprise a channel-shaped gripping section which is sized to embrace and firmly grip the flange and has attached to it a soft sealing part which runs along the length of one outside wall of the channel of the gripping part and is thus supported thereby so as to run around the periphery of the opening. The door or other closure member closes onto the soft sealing part, partially compressing it, and thereby providing an effective weather seal. One such sealing strip is known from FR-A-2 624 191.

Such sealing parts are often hollow and tubular. It is also known to connect the hollow interior of such a sealing part to a pressure or vacuum pump so that the air pressure within the hollow tubular part can be increased and decreased. When the air pressure is decreased, the door or other closure member can be closed easily, and the pressure can thereafter be increased so as to provide the effective sealing which is required. Clearly, such an arrangement is only practicable if the hollow tubular sealing part is air-tight along its whole length including over regions where it is necessary to carry out special manufacturing techniques to form corners or bends in the sealing strip.

According to the invention, there is provided a method of forming a bend or corner in a longitudinally extending sealing strip having a hollow sealing part of predetermined cross-sectional shape, comprising the steps of removing material of the sealing part in the region of the sealing strip where the bend or corner is to be formed so as to form a cut-out between first and second spaced ends of the sealing part, placing the sealing strip in a mould such that the mould cavity covers the major portion of the cut-out but leaves uncovered a minor portion of the cut-out adjacent the said second end, the mould cavity having an internal shape matching the external shape of the major part of the removed part but curved to match the bend or corner, placing within the mould cavity a core curved to match the bend or corner, injecting material into the mould cavity between it and the core so as to re-form the removed portion of the sealing part over the said major portion of the cut-out but with the required bend or corner configuration, removing the core via the gap formed by the minor portion of the cut-out part, and then closing off the said gap.

According to the invention, there is further provided apparatus for producing a bend of predetermined configuration in the hollow sealing part of a longitudinally extending sealing strip, comprising a mould having a mould cavity shaped and sized to receive the sealing strip in a region where the sealing part has been removed so as to form a cut-out between first and second spaced ends of the sealing part, the mould cavity having an internal shape matching the external shape of the removed sealing part along a major part of the length of the cut-out but not including a minor part thereof adjacent the said second end and the cavity being curved to match the curvature of the bend or corner, a curved core matching the curvature of the bend or corner, means for inserting the core into the cavity when the sealing part is positioned with the major part of the cut-out therein, and means for removing the core from the cavity after a moulding operation therein, the core being removed via the gap in the sealing part formed by the minor portion and which remains after the moulding operation and means for closing off said gap (D).

Sealing strips for sealing around door openings on motor vehicle bodies and embodying the invention, and methods and apparatus according to the invention for making such sealing strips, will now be described, by way of example only, with reference to the accompanying drawings in which:-
Figure 1 is a side view of the motor vehicle body;
Figure 2 is a section on the line II-II of Figure 1;
Figure 3 is a section on the line III-III of Figure 1;
Figure 4 is a perspective scrap view of part of the flange in the region of section III-III;
Figure 5 is a perspective view of part of the sealing strip at a stage in its manufacture;
Figure 6 is a diagrammatic view of part of the apparatus for use in manufacturing the sealing strip;
Figure 7 shows the apparatus of Figure 6 at a later stage in the manufacturing process;
Figure 8 is a perspective view showing more detail of the apparatus of Figures 6 and 7;
Figure 9 is a perspective view showing a following stage in the manufacturing process;
Figure 10 is a perspective view of a core used in the manufacturing stage illustrated by Figure 9;
Figure 11 is a cross-section on the line IX-IX of Figure 9 and showing a grommet in position;
Figure 12 illustrates apparatus for fitting the grommet of Figure 11;
Figure 13 shows the apparatus of Figure 12 in operation; and
Figure 14 is a view corresponding to Figure 11 but showing a modified form of grommet.

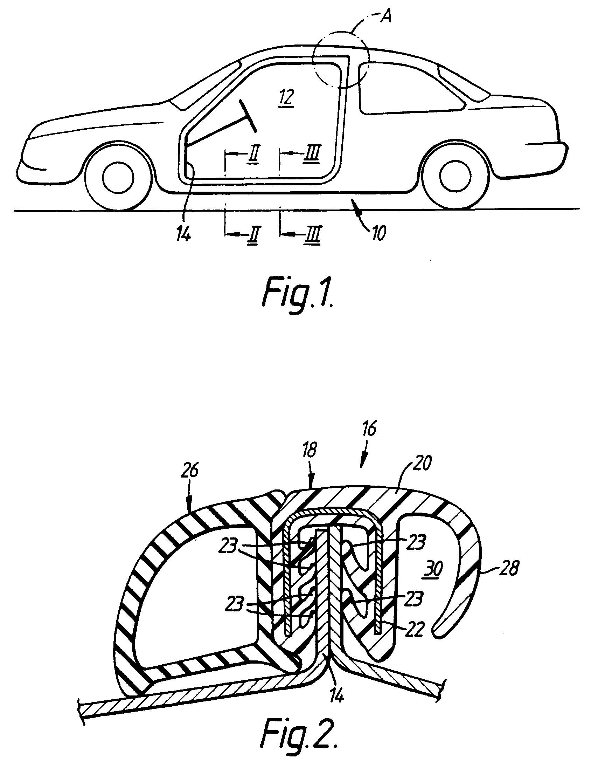

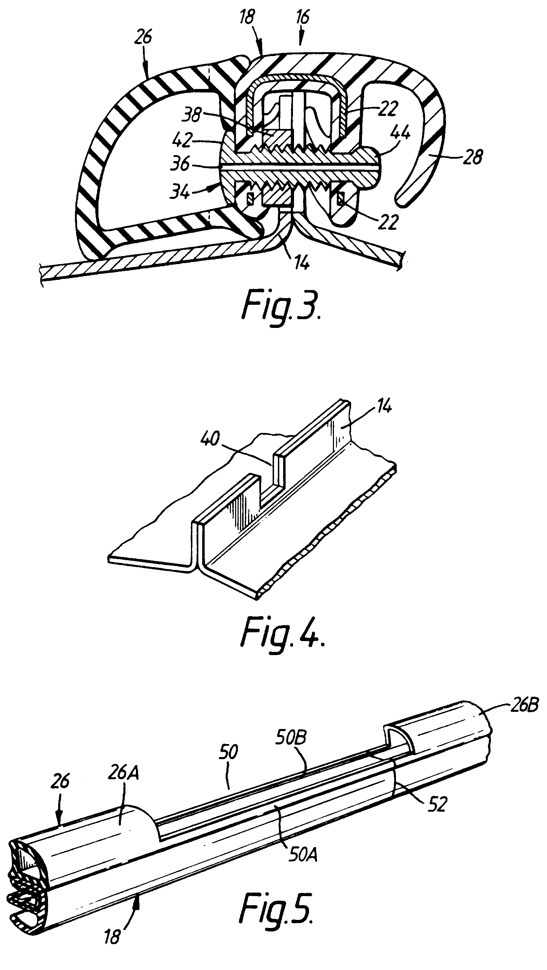

Figure 1 shows a motor vehicle body 10 having a door opening 12 which is defined by a flange 14 running completely around the opening. The door for the opening 12 is not shown. In order to provide a weather-proof seal around the periphery of the door opening, a sealing strip 16 is mounted on the flange 14 as shown in Figure 2. The sealing strip 16 comprises a gripping part 18 which is channel-shaped in cross-section and is made of plastics or rubber material 20 which is extruded over a channel-shaped metal core or carrier 22. The metal carrier 22 may take any suitable form. For example, it may comprise a series of side-by-side U-shaped metal members which define the channel and are either connected together by short flexible integral connecting links or are entirely disconnected. Instead, the carrier may be made of looped wire. Other forms of carrier are possible. Advantageously, a flexible but substantially inextensible tape (not shown) may be embedded in the extruded material 20 so as to extend along the length of the strip and prevent stretching.

The extruded material 20 is advantageously extruded to provide integral gripping lips 23. These are directed towards the base of the channel and, when the sealing strip is placed in position on the flange 14, make frictional contact with the sides of the flange 14 and ensure that the gripping part is firmly held in position.

The lips 23 need not be of the same hardness as the remainder of the extruded material 20.

In addition, the sealing strip 16 includes a sealing part 26. This is made of extruded rubber and is generally tubular in shape and hollow. As shown in Figure 2, it is secured to the outside of one side wall of the channel of the gripping part 18, such as by adhesive. Such construction is particularly used where the extruded material 20 is plastics. However, if the extruded material 20 is rubber, then the rubber sealing part 26 can be extruded integrally with the rubber 20. Advantageously, the rubber of the sealing part 26 is foamed or cellular so as to increase its flexibility.

In use, the sealing strip 16 is so supported that the door for closing the opening closes onto the sealing part 26 and partially compresses it, thus providing an effective weather-proof seal around the entire periphery of the door.

On the opposite outside channel wall, an enlarged lip 28 is provided which is again integral with the extruded material 20. The purpose of the lip 28 is primarily to locate and hide the edge of the interior trimming fabric of the vehicle body which is tucked up within the opening 30.

In use, the sealing strip extends around the entire periphery of the door.

In order to improve the functioning of the sealing strip, the hollow tubular sealing part 26 is made to be air-tight and a pump is provided in known manner for increasing and decreasing the air pressure within the sealing part. Such pressure changing enables the air pressure to be lowered when the door is to be closed onto the opening. The reduction in air pressure partially collapses the sealing part 26 and facilitates closing of the door. Thereafter, the air pressure within the sealing part 26 is increased, so as to inflate it and provide effective sealing. Figure 3 shows how the pressure within the sealing part 26 can be increased and decreased.

As shown, a generally tubular metal plug 34 having a through-bore 36 is forced through holes formed in the side walls of the channel of the gripping part 18, and through the metal carrier 22. The outside of this plug 34 is screw-threaded and engages a generally square nut 38. This nut seats itself in a square-section slot 40 (Figure 4) which is cut in the flange 14 at the appropriate place. One end 42 of the plug 34 opens into the hollow interior of the sealing section 26 while the other end 44 is concealed behind the lip 28 which enables a suitable connection to be made to the pump (not shown).

Such an arrangement clearly requires that the hollow tubular sealing part 26 be properly air-tight around the entire periphery. The sealing strip will be manufactured in indefinite length and an appropriate length will then be cut off and its two ends joined together to form a complete ring of the appropriate peripheral length. However, it is not possible for such a length of sealing strip to be properly fitted onto the entire flange. As shown at region A in Figure 1, the door opening contains at least one relatively sharp corner and the sealing strip cannot be bent sharply enough to match this corner. It is therefore necessary to carry out a particular forming process so as to match the configuration of the sealing strip to this corner and this process will now be described. Clearly, it is important that the process does not impair the air-tightness of the complete sealing part.

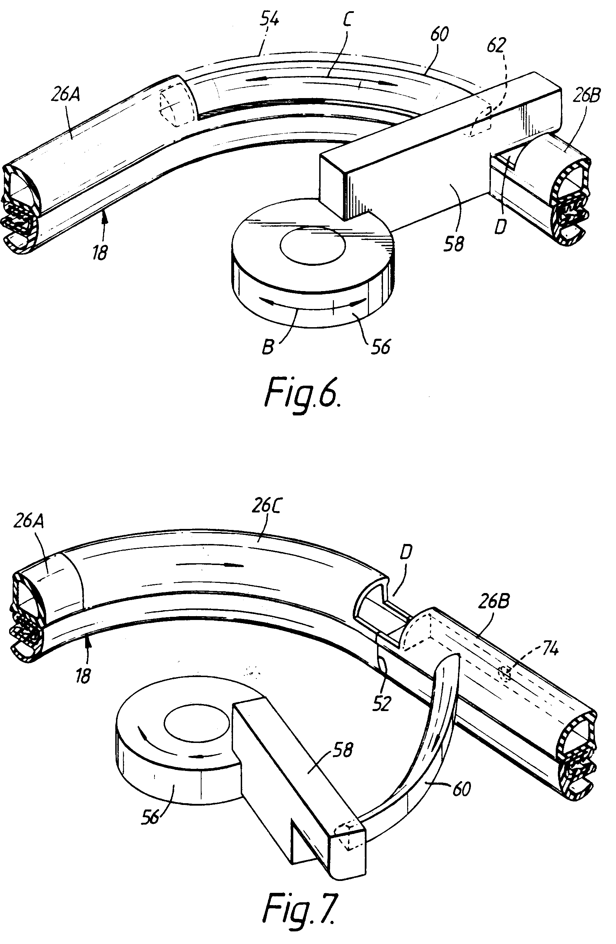

In order to provide an appropriately shaped bend or corner in the sealing strip to match the corner in the flange as shown at region A in Figure 1, a length of the sealing part 26 is removed (between 26A and 26B) as shown at 50 in Figure 5. The sealing part is completely removed except for vestigial parts of its walls shown at 50A and 50B. Also shown in Figure 5 is the join 52 between the two ends of the length of sealing strip. The region of the sealing strip incorporating the cut-out 50 is then subjected to an injection-moulding operation now to be described.

This moulding operation uses a mould having a cavity which has such internal shape and configuration that, when the sealing strip with the cut-out 50 is placed in position within the cavity and rubber material thereafter injected, the result is to re-form the section of the sealing part which was removed to form the cut-out 50 - except that the cavity is formed with such curvature that the injection-moulded section of the sealing part has the required curvature to match the bend at region A (Figure 1).

As shown in Figure 6, the mould, whose body is not illustrated, defines a curved cavity 54 matching the external shape of the sealing part 26 and curved to match the bend of region A. In addition, the mould incorporates a rotary member 56 carrying a radial arm 58. Mounted on the radial arm 58 is a solid curved core 60, such as made of metal. The curvature of the core 60 matches that of the bend of region A and its cross-sectional shape matches the interior cross-sectional shape of the sealing part 26. As the rotary member 56 rotates in the directions of the arrows B, the core moves in the directions of the arrows C.

Prior to the moulding operation, the rotary member 56 positions the arm 58, and the core 60, in the attitude shown in Figure 6. In other words, the core 60 extends along the length of the cut-out 50 which is located within the mould cavity 54. In fact, the arm 58 spaces the end 62 of the core 60 from the end of the cut-out 50 defined by sealing part 26B; in other words, there is a region D of the cut-out 5O over which the core 60 does not extend.

The opposite end of the core 60 extends partly into the sealing part 26A at that end of the cut-out 50.

The actual injection moulding operation then takes place. That is, rubber material is injected into the cavity 54 so as to fill the space between the core 60 and the cavity 54.

The result is the formation, by the injection moulding process, of a curved sealing part 26A (see Fig. 7) which matches in external cross-sectional shape the external cross-sectional shape of the adjacent portions 26A and 26B. In addition, its internal cross-sectional shape matches the internal cross-sectional shape of the adjacent portions. It is of course formed with appropriate curvature to match the curvature required for the bend at region A (Fig. 1).

As shown in Figure 7, which omits the part of the mould defining the cavity 54, rotary member 56 is then rotated so as to swing the arm 58 into the position shown. This draws the curved core 60 out of the interior of the moulded-on portion 26C of the sealing part 26. This withdrawal process necessitates flattening of the portion of the sealing part 26B adjacent the cut-out D, but the flexibility of the material of the sealing part here renders this quite easy. Fig. 7 also shows that the join line 52 (Fig. 5) between the two ends of the sealing strip are situated within cut-out D.

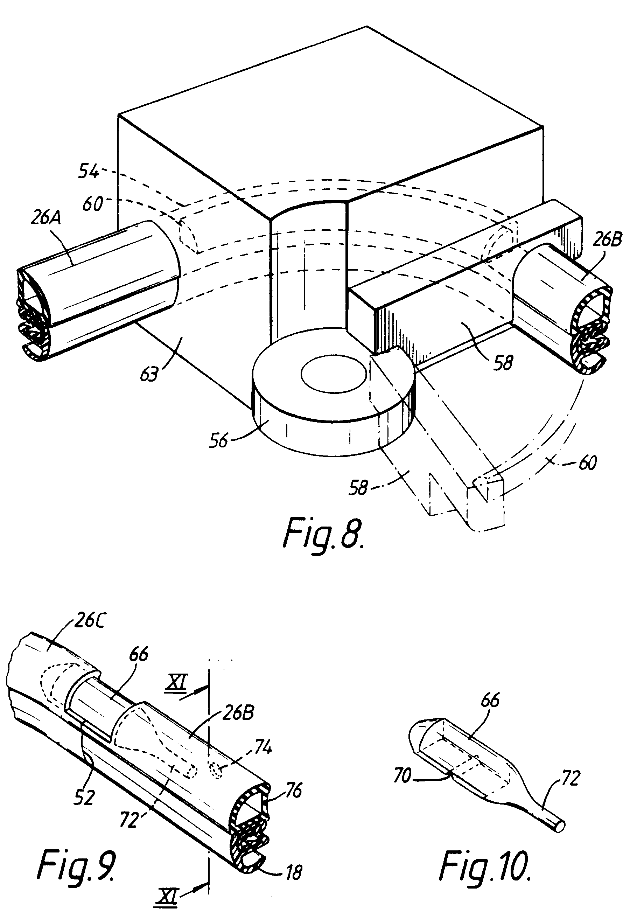

Figure 8 shows the actual mould 63 in more detail. As shown, it comprises a block incorporating the cavity 54 in which the part of the sealing strip incorporating the cut-out 50 is inserted. The rotary member 56 and the arm 58 are mounted externally on the block 63, the arm being shown in its two positions.

It is now necessary to complete the sealing strip by closing-up the remaining cut-out or gap D. As shown in Figure 9, this is carried out in a second injection-moulding operation using a further metal core 66. Figure 9 shows this core in position and Figure 10 shows it before insertion. It is generally bottle-shaped and has an underside 68 which is flat except for a groove 70. The core 66 is positioned within the sealing parts 26C and 26B (Figure 9) so that the groove 70 bridges over the join line 52 (see Fig.5).

The sealing strip with the core 66 in position is then placed in a further mould cavity (not shown) whose internal shape and configuration match the external shape and configuration of the sealing part 26. Rubber material is then injected and completes the sealing part, that is, it encloses the cut-out D and in a manner which matches the curvature at region A.

It is then necessary to remove the core 66. The core is removed by manipulating the soft material of the sealing part 18 so as to push a narrow neck 72 of the core through a hole 74 in the base 76 of the gripping part 18. By pulling on the neck 72, the entire metal core can be pulled through the opening 74, the flexibility and stretchability of the material of the sealing part enabling this to be done.

The groove 70 (Figure 10) ensures that some of the injected material is placed directly over the join line 52 so as to prevent any possibility of air leakage here.

After the moulding operations described, the sealing strip is subjected to vulcanisation as by hot air oven.

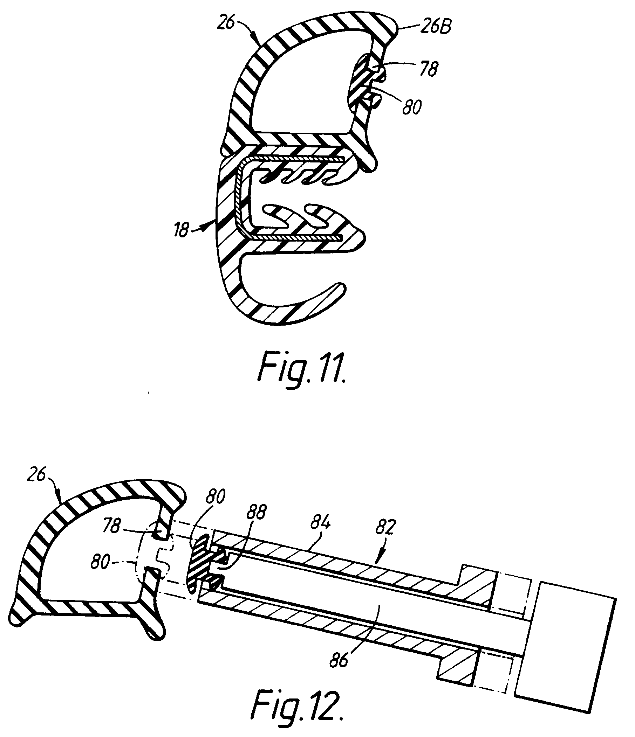

All that remains in order to complete the bend is to close off the hole 78. The hole is closed by means of a rubber grommet 80 as shown in Figure 11. Rubber grommet 80 is fixed in position using a tool 82 as shown in Figure 12. The tool comprises a hollow metal cylinder 84 whose diameter is greater than the diameter of the hole 78. A piston 86 is slidable within the cylinder 84 and carries a nose 88 on which is mounted the grommet 80. In order to fix the grommet in position, the whole tool is bodily moved into contact with the sealing part 26 and piston 86 is then slid relative to the cylinder 84, such as by manual or air or hydraulic pressure for example, so as to push the grommet 80 partially through the hole 78 and into the locking configuration shown in Figure 11. Then, while the cylinder 84 is held pressed against the sealing part surrounding the opening 78, the piston 86 is withdrawn so that the neck 88 separates from the grommet 80 which remains in the proper position within the hole 78, all as shown in Figure 12. Figures 11 and 12 omit the gripping part 18 of the sealing strip.

The inserted grommet 80 is smeared with suitable mastic before fitment and the strip is thereafter subjected to vulcanisation as by hot air oven to cure this mastic.

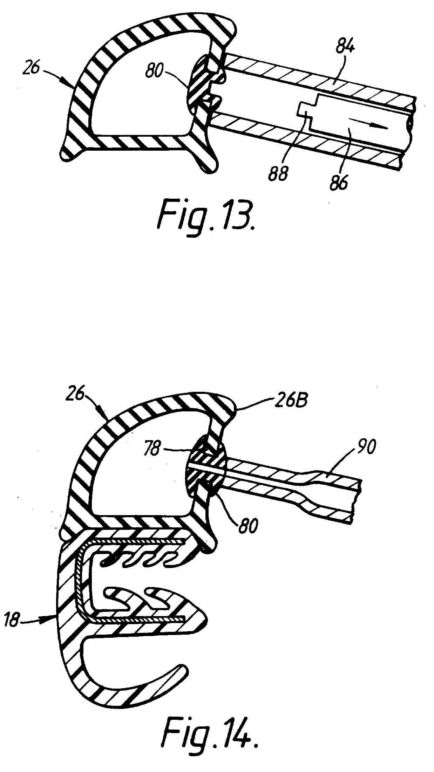

Figure 14 corresponds to Figure 11 but shows a modified form of the grommet 80 which incorporates an air inlet/outlet 90 by means of which the pressure within the hollow interior of the sealing part can be altered in use of the seal. The modified form of grommet can be fitted in substantially the manner illustrated in Figures 12 and 13.

The foregoing description of the moulding and subsequent operations assume that the sealing part 26 is extruded separately from the gripping part 18. In such a construction, the extruded material 20 (Figure 2) of the gripping part 18 is normally plastics (e.g. PVC) (the sealing part is rubber). During the moulding operations it is preferable to protect the plastics from the heat of the moulding.

If the sealing strip is such that the sealing and gripping parts are extruded together in rubber, the cutting operation, to form the cut-out 50 (Figure 5), is advantageously modified so as to cut away extra rubber, this extra rubber being rubber on the adjacent side of the gripping part 18 and being cut away to leave exposed the adjacent part of the metal carrier 22. During the moulding operation, this cut-away extra rubber is replaced by the moulding process but the replaced rubber differs from the original cut-away extra rubber in that it is curved to match the curvature of the bend of region A (Figure 1) and is therefore less stressed than would the original extra rubber if it were not cut-away but curved to match the bend.

## Claims

1. A method of forming a bend or corner in a longitudinally extending sealing strip (16) having a hollow sealing part (26) of predetermined cross-sectional shape, comprising the steps of removing material of the sealing part (26) in the region of the sealing strip (16) where the bend or corner is to be formed so as to form a cut-out (50) between first and second spaced ends of the sealing part (26), placing the sealing strip (16) in a mould (63) with the cut-out (50) extending into the mould cavity (54) thereof, the mould cavity (54) having an internal shape matching the external shape of the material removed from the cut-out (50) in the mould cavity (54), placing within the mould cavity (54) a core (60), and injecting material into the mould cavity (54) between it and the core (60) so as to produce moulded material replacing at least part of the removed material of the sealing part (26), whereby the mould cavity (54) is curved to match the bend or corner and the core is similarly curved, and in that the mould cavity (54) covers the major portion of the cut-out (50) but leaves uncovered a minor gap (D) of the cut-out (50) adjacent the said second end, and by the steps of removing the core (60) via the gap (D) formed by the minor portion of the cut-out part (50), and then closing off the said gap (D).

2. A method according to claim 1, characterised in that the step of removing the core (60) through the said gap (D) includes the step of partially flattening the material of the sealing part (26) adjacent the said second end.

3. A method according to claim 1 or 2, characterised in that the core (60) is inserted into the mould cavity (54) and removed therefrom by means of a movable arm (58) to which it is attached.

4. A method according to any preceding claim, characterised in that the step of closing off the said gap (D) comprises the step of placing a secondary core (66) within the said gap (D) along the minor portion of the cut-out, placing the sealing strip (16) in a mould cavity such as to embrace the said gap (D) and the secondary core (66) therein and having an internal shape matching the external shape of the removed part of the sealing part (26), injecting material into this mould cavity so as to close off the gap (D), and removing the secondary core (66) through an aperture (74) in the sealing part (26).

5. A method according to any preceding claim, characterised in that the or each core (60,66) has a cross-sectional size and shape matching that of the respective portion of the removed material of the sealing part (26).

6. A method according to claim 4, characterised in that the secondary core (66) has a part (72) of narrowed cross-section to facilitate its egress through the aperture (74) in the sealing part (26).

7. A method according to claim 4 or 6, characterised by the step of closing off the aperture (74) in the sealing part (26) after removal of the secondary core (66).

8. A method according to claim 7, characterised in that the step of closing off the aperture (74) in the sealing part (26) comprises the step of inserting a grommet (80) into the aperture (74).

9. A method according to claim 8, characterised in that the step of inserting the grommet (80) into the aperture (74) by means of a piston (86) slidable within a hollow cylinder (84), the piston (86) having a locking device (88) for mechanically interlocking it with the grommet (80), and by the step of supporting the material around the aperture (74) with the cylinder (84) while sliding the piston (86) away from the sealing part (26) so as to withdraw the locking device (88) from the grommet (80).

10. A method according to any preceding claim, characterised in that the hollow interior of the sealing part (26) is air-tight.

11. A method according to claim 10, characterised in that the sealing strip (7) comprises a channel-shaped gripping part (18) matching the length of and supporting the sealing part (26) and in that the sealing strip (7) is in the form of a closed ring produced by joining together the ends of a predetermined length of the sealing strip (7) such that part of the join (52) between the gripping parts (18) at the two ends is situated within the cut-out (50), and by the step of laying injected material over the said part of the join (52).

12. Apparatus for producing a bend of predetermined configuration in a hollow sealing part (26) of a longitudinally extending sealing strip (7), comprising a mould (60) having a mould cavity shaped and sized to receive the sealing strip (7) in a region where the sealing part (26) has been removed so as to form a cut-out (50) between first and second spaced ends of the sealing part (26), the mould cavity (54) having an internal shape matching the external shape of at least part of the removed sealing part (26), and a core (60), wherein the internal shape of the mould cavity matches the external shape of the removed sealing part (26) along a major part of the length of the cut-out but not including a minor gap (D) thereof adjacent the said second end and is curved to match the curvature of the bend or corner, in that the core (60) is curved to match the curvature of the bend or corner, and by a device (58) for inserting the core (60) into the cavity (54), and a device for removing the core (60) from the cavity (54) after a moulding operation therein via the gap (D) in the sealing part (26) formed by the minor portion and which remains after the moulding operation and means for closing off said gap (D).

13. Apparatus according to claim 12, characterised in that the device for placing the core (60) in position and the device for removing the core (60) comprises a pivotted arm (58) carrying the core (60).

14. Apparatus according to claim 12 or 13, characterised by a secondary core (66) adapted to be placed within the minor gap (D) of the cut-out, and a mould cavity having an internal shape matching the external shape of the removed sealing part along the minor portion of the cut-out (50) for receiving the region of the sealing strip (7) incorporating the minor portion and with the secondary core (66) therein.

15. Apparatus according to claim 14, characterised in that the secondary core (66) has a narrowed part (72) to facilitate its removal from the sealing part (26) via a hole (74) therethrough.

16. Apparatus according to claim 15, characterised by a device (82) for placing a grommet (80) sealingly within the said hole (74), the device (82) comprising a hollow rigid cylinder (84) around the outside of the periphery of the hole (74), and a piston (86) slidable within the cylinder (84) and having a device (88) for mechanically locking it to the grommet (80) and slidable for pushing the grommet (80) into locking engagement in the hole (72) and with the material of the sealing part (26) around the hole (72), whereby sliding of the piston (86) in the opposite direction unlocks the locking device (88) from the grommet (80) as the material of the sealing part (26) is supported around the hole (74) by the cylinder (84).

## Patentansprüche

1. Verfahren zur Ausbildung einer Biegung oder Kurve in einem sich längs erstreckenden, einen hohlen Dichtungsteil (26) von vorbestimmter Querschnittsform aufweisenden Dichtungsstreifen (16) umfassend die Verfahrensschritte Entfernen von Material des Dichtungsteils (26) in jenem Bereich des Dichtungsstreifens (16), in dem die Biegung oder Kurve auszubilden ist, um so einen Ausschnitt (50) zwischen einem ersten und einem zweiten beabstandeten Ende des Dichtungsteils (26) auszubilden, Plazieren des Dichtungsstreifens (16) in einer Form (63), wobei sich der Ausschnitt (50) in einen Formhohlraum (54) der Form (63) erstreckt und der Formhohlraum (54) eine innere Gestalt aufweist, die der äußeren Gestalt des von dem Ausschnitt (50) entfernten Materials in dem Formhohlraum (54) entspricht, Plazieren eines Kerns (60) im Inneren des Formhohlraums (54) und Einspritzen von Material in den Formhohlraum (54) zwischen diesen und den Kern (60), um ein Formmaterial herzustellen, das wenigstens einen Teil des von dem Dichtungsteil (26) entfernten Materials ersetzt, wobei der Formhohlraum (54) gekrümmt ist, um der Biegung oder Kurve zu entsprechen und der Kern (60) entsprechend gekrümmt ist und wobei der Formhohlraum (54) einen großen Teil des Ausschnitts (50) umfaßt, jedoch einen kleinen Spalt D des Ausschnitts (50) in der Nähe des zweiten Endes unverdeckt läßt, sowie mit den Verfahrensschritten Entfernen des Kerns (60) über den von dem kleinen Bereich des Ausschnitts (50) gebildeten Spalt D und anschließendes Verschließen des Spalts D.

2. Verfahren nach Anspruch 1,
**dadurch gekennzeichnet**,
daß der Verfahrensschritt Entfernen des Kerns (60) durch den Spalt D den Verfahrensschritt teilweises Abflachen des Materials des Dichtungsteils (26) in der Nähe des zweiten Endes umfaßt.

3. Verfahren nach einem der Ansprüche 1 oder 2, dadurch gekennzeichnet, daß der Kern (60) mittels eines bewegbaren Arms (58), an dem der Kern (60) angebracht ist, in den Formhohlraum (54) eingesetzt und aus diesem entfernt wird.

4. Verfahren nach einem der Ansprüche 1 bis 3, gekennzeichnet durch den Verfahrensschritt Verschließen des Spalts D, bestehend aus den Verfahrensschritten Plazieren einen Zweitkerns (66) in dem Spalt D entlang des kleinen Bereichs des Ausschnitts (50), Plazieren des Dichtungsstreifens (16) derart in einem Formhohlraum, daß er den Spalt D und den darin befindlichen Zweitkern (66) umschließt, wobei die innere Gestalt des Formhohlraums der äußeren Gestalt des entfernten Teils des Dichtungsteils (26) entspricht, Einspritzen von Material in den Formhohlraum, um den Spalt D zu verschließen, sowie Entfernen des Zweitkerns (66) durch eine Öffnung (74) in dem Dichtungsteil (26).

5. Verfahren nach einem der Ansprüche 1 bis 4, dadurch gekennzeichnet, daß der eine oder jeder Kern (60, 66) eine Querschnittsgröße und Querschnittsform aufweist, die dem jeweiligen Bereich des von dem Dichtungsteil (26) entfernten Material entspricht.

6. Verfahren nach Anspruch 4, dadurch gekennzeichnet, daß der Zweitkern (66) einen Teil (72) schmaleren Querschnitts aufweist, um dessen Austritt durch die Öffnung (74) in dem Dichtungsteil (26) zu erleichtern.

7. Verfahren nach Anspruch 4 oder 6, gekennzeichnet durch den Verfahrensschritt Verschließen der Öffnung (74) in dem Dichtungsteil (26) nach dem Entfernen des Zweitkerns (66).

8. Verfahren nach Anspruch 7, dadurch gekennzeichnet, daß der Verfahrensschritt Verschließen der Öffnung (74) in dem Dichtungsteil (26) den Verfahrensschritt Einfügen eines Verschlußelements (80) in die Öffnung (74) umfaßt.

9. Verfahren nach Anspruch 8, gekennzeichnet durch den Verfahrensschritt Einfügen des Verschlußelements (80) in die Öffnung (74) mittels eines in einem hohlen Zylinder (84) verschiebbaren Kolbens (86), wobei der Kolben (86) eine Festlegevorrichtung (88) zum mechanischen Verzahnen der Vorrichtung mit dem Verschlußelement (80) aufweist sowie durch den Verfahrensschritt Abstützen des Materials um die Öffnung (74) mittels des Zylinders (84), während der Kolben (86) von dem Dichtungsteil (26) fortgeschoben wird, um die Festlegevorrichtung (88) von dem Verschlußelement (80) abzuziehen.

10. Verfahren nach einem der Ansprüche 1 bis 9, dadurch gekennzeichnet, daß das hohle Innere des Dichtungsteils (26) luftdicht ist.

11. Verfahren nach Anspruch 10, dadurch gekennzeichnet, daß der Dichtungsstreifen (7) einen kanalförmigen Halteteil (18) umfaßt, der den Dichtungsteil (26) trägt und dessen Länge entspricht, und daß der Dichtungsstreifen (7) durch Zusammenfügen der Enden einer vorbestimmten Länge des Dichtungsstreifens (7) in der Form eines geschlossenen Rings hergestellt ist, so daß die Verbindungsstelle (52) zwischen den Halteteilen (18) an den zwei Enden innerhalb des Ausschnitts (50) gelegen ist, sowie gekennzeichnet durch den Verfahrensschritt, eingespritztes Material über die Verbindungsstelle (52) zu legen.

12. Vorrichtung zum Erzeugen einer Krümmung vorbestimmter Gestalt in einem hohen Dichtungsteil (26) eines sich längs erstreckenden Dichtungsstreifens (7) mit einer Form (63), die einen Formhohlraum aufweist, der ausgestaltet und bemessen ist, um den Dichtungsstreifen (7) in einem Bereich aufzunehmen, wo der Dichtungsteil (26) entfernt worden ist, um einen Ausschnitt (50) zwischen einem ersten und zweiten beabstandeten Ende des Dichtungsteils (26) auszubilden, der Formhohlraum (54) eine innere Gestalt aufweist, die der äußeren Gestalt wenigstens eines Teils des entfernten Dichtungsteils (26) entspricht sowie mit einem Kern (60), wobei die innere Gestalt des Formhohlraums längs eines großen Teils der Länge des Ausschnitts der äußeren Gestalt des entfernten Dichtungsteils (26) entspricht, jedoch ein kleinerer Spalt D des Ausschnitts in der Nähe des zweiten Endes nicht umfaßt, der Formhohlraum gekrümmt ist, um der Krümmung der Biegung oder Kurve zu entsprechen, und wobei der Kern (60) gekrümmt ist, um der Krümmung der Biegung oder Kurve zu entsprechen, sowie mit einer Vorrichtung (58) zum Einsetzen des Kerns (60) in den Formhohlraum (54), einer Vorrichtung zum Entfernen des Kerns (60) aus dem Formhohlraum (54), nach einem darin ausgeführten Formprozeß, über den Spalt D in dem Dichtungsteil (26), der von dem kleinen Bereich gebildet wird und nach dem Formprozeß übrigbleibt, sowie mit Mitteln zum Verschließen des Spalts D.

13. Vorrichtung nach Anspruch 12, dadurch gekennzeichnet, daß die Vorrichtung zum Plazieren des Kerns (60) in der richtigen Lage sowie die Vorrichtung zum Entfernen des Kerns (60) einen drehbaren Arm (58) beinhalten, der den Kern (60) trägt.

14. Vorrichtung nach Anspruch 12 oder 13, gekennzeichnet durch einen Zweitkern (66), der angepaßt ist, um in dem kleinen Spalt D des Ausschnitts plaziert zu werden, sowie durch einen Formhohlraum, der eine innere Gestalt aufweist, die entlang des kleinen Bereichs des Ausschnitts (50) der äußeren Gestalt des entfernten Dichtungsteils entspricht, um den Bereich des Dichtungsstreifens (7) aufzunehmen, der den kleinen Bereich mit dem darin angeordneten Zweitkern (66) enthält.

15. Vorrichtung nach Anspruch 14, dadurch gekennzeichnet, daß der Zweitkern (66) einen schmaleren Teil (72) aufweist, um dessen Entfernen von dem Dichtungsteil (26) über ein Loch (74) in dem Dichtungsteil (26) zu erleichtern.

16. Vorrichtung nach Anspruch 15, gekennzeichnet durch eine Vorrichtung (82), um ein Verschlußelement (80) abdichtend in dem Loch (74) zu plazieren, wobei die Vorrichtung (82) einen hohlen, starren Zylinder (84) um die Außenseite des Randes des Lochs (74) und einen in dem Zylinder (84) verschiebbaren Kolben (86) umfaßt und der Kolben (86) eine Vorrichtung (88) aufweist, um mechanisch diese Vorrichtung an dem Verschlußelement (80) festzulegen, der Kolben (86) verschiebbar ist, um das Verschlußelement (80) in schließenden Eingriff in das Loch (74) und mit dem Material des Dichtungsteils (26) um das Loch (74) zu drücken, wodurch sich durch Verschieben des Kolbens (86) in die entgegengesetzte Richtung die Festlegevorrichtung (88) von dem Verschlußelement (80) löst, während der Zylinder (84) das Material des Dichtungsteils (26) um das Loch (74) unterstützt.

## Revendications

1. Procédé de formation d'un coude ou angle dans une bande d'étanchéité (16) s'étendant longitudinalement et possédant une partie d'étanchéité creuse (26) d'une forme de section transversale prédéterminée, qui comprend les phases consistant à enlever de la matière de la partie d'étanchéité (26) dans la région de la bande d'étanchéité (16) dans laquelle il s'agit de former le coude ou angle, de manière à former une échancrure (50) entre des première et deuxième extrémités espacées de la partie d'étanchéité (26), placer la bande d'étanchéité (16) dans un moule (63) de manière que l'échancrure (50) pénètre dans l'empreinte (4) de ce moule, l'empreinte (54) du moule ayant une forme interne qui correspond à la forme externe de la matière enlevée de l'échancrure (50) dans l'empreinte (54) du moule, placer dans l'empreinte (54) du moule un noyau (60) et injecter de la matière dans l'empreinte (54) du moule entre cette empreinte et le noyau (60) pour produire une matière moulée qui remplace au moins une partie de la matière enlevée de la partie d'étanchéité (26), l'empreinte (54) du moule étant incurvée pour correspondre à la forme du coude ou de l'angle, et le noyau étant incurvé de la même façon, et l'empreinte (54) du moule couvrant la majeure partie de l'échancrure (50) tout en laissant à découvert une petite brèche (D) de l'échancrure (50) dans la région adjacente à ladite deuxième extrémité, et le procédé comprenant en outre les phases consistant à extraire le noyau (60) à travers la brèche (D) formée par la petite partie de l'échancrure (50) puis à refermer ladite brèche (D).

2. Procédé selon la revendication 1, caractérisé en ce que la phase consistant à enlever le noyau (60) à travers ladite brèche (D) comprend la phase consistant à aplatir partiellement la matière de la partie d'étanchéité (26) dans la région adjacente à ladite deuxième extrémité.

3. Procédé selon la revendication 1 ou 2, caractérisé en ce que le noyau (60) est inséré dans l'empreinte (54) du moule et en est enlevé au moyen d'un bras mobile (58) auquel il est fixé.

4. Procédé selon une quelconque des revendications précédentes, caractérisé en ce que la phase consistant à refermer ladite brèche (D) comprend la phase à placer un noyau secondaire (66) dans ladite brèche (D), le long de la petite partie de l'échancrure, placer la bande d'étanchéité (16) dans une empreinte de moule de manière à recouvrir ladite brèche (D) et le noyau secondaire (66) logé dans celle-ci, et ayant une forme intérieure qui correspond à la forme extérieure de la partie enlevée de la partie d'étanchéité (26), injecter de la matière dans ladite empreinte de moule de manière à refermer la brèche (D), et enlever le noyau secondaire (66) à travers une ouverture (74) pratiquée dans la partie d'étanchéité (26).

5. Procédé selon une quelconque des revendications précédentes, caractérisé en ce que le noyau ou chaque noyau (60, 66) a une dimension et forme de section qui correspondent à celles de la partie respective de la matière enlevée de la partie d'étanchéité (26).

6. Procédé selon la revendication 4, caractérisé en ce que le noyau secondaire (66) comprend une partie (72) de section rétrécie pour faciliter sa sortie à travers l'ouverture (74) de la partie d'étanchéité (26).

7. Procédé selon la revendication 4 ou 6, caractérisé par la phase consistant à refermer l'ouverture (74) de la partie d'étanchéité (26) après l'enlèvement du noyau secondaire (66).

8. Procédé selon la revendication 7, caractérisé par la phase consistant à refermer l'ouverture (74) de la partie d'étanchéité (26) comprend la phase consistant à insérer un bouchon (80) dans l'ouverture (74).

9. Procédé selon la revendication 8, caractérisé par la phase consistant à insérer un bouchon (80) dans l'ouverture (74) au moyen d'un piston (86) qu'on peut faire coulisser dans un cylindre creux (84), le piston (86) étant muni d'un dispositif de verrouillage (88) servant à le verrouiller mécaniquement sur le bouchon (80), et par la phase consistant à soutenir la matière autour de l'ouverture (74) formée dans le cylindre (84) pendant qu'on fait coulisser le piston (86) dans le sens qui l'éloigne de la partie d'étanchéité (26) de manière à retirer le dispositif de verrouillage (88) du bouchon (80).

10. Procédé selon une quelconque des revendications précédentes, caractérisé en ce que le volume intérieur creux de la partie d'étanchéité (26) est étanche à l'air.

11. Procédé selon la revendication 10, caractérisé en ce que la bande d'étanchéité (7) comprend une partie de prise (18) en forme de gouttière qui correspond à la longueur de la partie d'étanchéité (26) et supporte cette partie, et en ce que la bande d'étanchéité (7) présente la forme d'un anneau fermé produit en réunissant les extrémités d'une longueur prédéterminée de la bande d'étanchéité (7) de telle manière qu'une partie du joint (52) formée entre les parties de prise (18) aux deux extrémités soit située dans l'échancrure (50) et par la phase consistant à déposer de la matière injectée sur ladite partie du joint (52).

12. Machine pour produire un coude d'une configuration prédéterminée dans la partie d'étanchéité creuse (26) d'une bande d'étanchéité (7) s'étendant longitudinalement, qui comprend un moule (60) ayant une empreinte de moule conformée et dimesionnée pour recevoir la bande d'étanchéité (7) dans une région où la partie d'étanchéité (26) a été enlevée de manière à former une échancrure (50) entre les première et deuxième extrémités espacées de la partie d'étanchéité (26), l'empreinte (54) du moule ayant une forme interne qui correspond à la forme externe d'au moins une partie de la partie d'étanchéité enlevée (26), et un noyau (60), dans laquelle la forme intérieure de l'empreinte du moule correspond à la forme extérieure de la partie d'étanchéité enlevée (26) le long d'une majeure partie de la longueur de l'échancrure, mais sans comprendre une petite brèche (D) de cette échancrure qui est adjacente à ladite deuxième extrémité et est incurvée pour correspondre à la courbure du coude ou angle, le noyau (60) est incurvé pour correspondre à la courbure du coude ou angle, et la machine comprend un dispositif (58) servant à insérer le noyau (60) dans l'empreinte (54), et un dispositif servant à extraire le noyau (60) de l'empreinte (54) après une opération de moulage exécutée dans cette empreinte, à travers la brèche (D) de la partie d'étanchéité (26) formée par la petite partie et qui reste après l'opération de moulage, et des moyens servant à refermer ladite brèche (D).

13. Machine selon la revendication 12, caractérisée en ce que le dispositif servant à placer le noyau (60) en position et le dispositif servant à extraire le noyau (60) comprennent un bras pivotant (58) qui porte le noyau (60).

14. Machine selon la revendication 12 ou 13, caractérisée par un noyau secondaire (66) adapté pour être placé dans la petite brèche (D) de l'échancrure, et une empreinte de moule ayant une forme intérieure qui correspond à la forme extérieure de la partie d'étanchéité enlevée le long de la petite portion de l'échancrure (50) pour recevoir la région de la bande d'étanchéité (7) qui comprend la petite portion et le noyau secondaire (66) qui y est situé.

15. Machine selon la revendication 14, caractérisée en ce que le noyau secondaire (66) possède une partie rétrécie (72) pour faciliter son extraction hors de la partie d'étanchéité (26) à travers un trou (74) qui la traverse.

16. Machine selon la revendication 15, caractérisée par un dispositif (82) servant à placer un bouchon (80) à joint étanche dans ledit trou (74), le dispositif (82) comprenant un cylindre rigide creux (88) placé autour de la surface extérieure de la périphérie du trou (74) et un piston (86) qui peut coulisser dans le cylindre (84) et est muni d'un dispositif (88) servant le verrouiller mécaniquement sur le bouchon (80) et qui peut coulisser pour pousser le bouchon (80) en prise verrouillée dans le trou (72) et avec la matière de la partie d'étanchéité (26) autour du trou (72), de sorte que le coulissement du piston (86) dans le sens opposé déverrouille le dispositif de verrouillage (88) du bouchon (80) lorsque la matière de la partie d'étanchéité (26) est soutenue autour du trou (74) par le cylindre (84).
